# EUROPEAN PATENT APPLICATION

(11) **EP 3 521 761 A1**
(43) Date of publication of application: **07.08.2019**
(21) Application number: 19150979.3
(22) Date of filing: 09.01.2019
(51) Int. Cl.: G01C 21/34

(54) **NAVIGATION METHOD AND SYSTEM FOR DETERMINING AND DISPLAYING INTERSECTION INFORMATION**

(30) Priority: 31.01.2018 TW 10703381
(71) Applicant: Kwang Yang Motor Co., Ltd., Kaohsiung City 80794 (TW)
(72) Inventor: LIN, Chen- Sheng, 80794 Kaohsiung (TW); TSAI, Yi-Yang, 80794 Kaohsiung (TW); WANG, John C., 11501 Taipei City (TW); CHEN, Li-Hui, 11501 Taipei City (TW)
(74) Representative: Roberts, David

(57) **Abstract**

A navigation method implemented using a navigation device (6) and a map-and-information system (71) includes: transmitting a current location of the navigation device (6) and a user-input destination to the map-and-information system (71) ; planning, by the map-and-information system (71), a navigation path indicating a point of action; calculating a number of intersections between the current location of the navigation device (6) and the point of action along the navigation path; and transmitting intersection information including the number of intersections to the navigation device (6) for displaying.

## Description

The disclosure relates to a navigation method and a system for determining and displaying intersection information.

Conventionally, when a person intends to move to a predetermined destination, he/she may operate an electronic device with navigation functionality for the electronic device to provide and display a path that leads the user to move from a current location of the user to the destination. Specifically, the path may include a number of sections that are interconnected by a sequence of points of action (e.g., an intersection at which the user is to take a turn) . Additionally, in displaying the path, the electronic device may further display other information regarding one section of the path, such as the intersection(s) that is (are) located between the current location of the user and a next one of the points of action, a distance to the next one of the points of action, and a suggested action to take (e.g., going forward for 100 meters and turn right).

One object of the disclosure is to provide a navigation method for determining and displaying intersection information.

According to one embodiment of the disclosure, the navigation method for determining and displaying intersection information is to be implemented using a navigation device in communication with a cloud server that operates a map-and-information system. The navigation method includes:
transmitting, by the navigation device, a current location of the navigation device and a user-input destination to the map-and-information system;
planning, by the map-and-information system, a navigation path based on the current location of the navigation device and the user-input destination, the navigation path being used to direct a user of the navigation device to move from the current location of the navigation device to the user-input destination, and indicating a point of action thereon;
calculating, by the map-and-information system, a number of intersections between the current location of the navigation device and the point of action along the navigation path;
transmitting, by the map-and-information system, intersection information including the number of intersections to the navigation device; and
displaying, by the navigation device, the intersection information received from the map-and-information system.

Another object of the disclosure is to provide a system for implementing the above-mentioned method.

According to one embodiment of the disclosure, the navigation system is for determining and displaying intersection information. The navigation system includes:
a navigation device that is carried by a user for receiving a user-input destination and that is capable of obtaining a current location thereof; and
a cloud server that is in communication with said navigation device and that operates a map-and-information system, wherein the map-and-information system is programmed to, in response to receiving the current location of said navigation device and the user-input destination from said navigation device,
   plan, based on the current location of said navigation device and the user-input destination, a navigation path that is used to direct the user to move from the current location of said navigation device to the user-input destination, and that indicates a point of action thereon,
   calculate a number of intersections between the current location of said navigation device and the point of action along the navigation path, and
   transmit intersection information including the number of intersections to said navigation device for displaying the intersection information.

Other features and advantages of the disclosure will become apparent in the following detailed description of the embodiments with reference to the accompanying drawings, of which:
Figure 1 is a block diagram illustrating a system for determining and displaying intersection information according to one embodiment of the disclosure;
Figure 2 illustrates a navigation device that displays a navigation screen;
Figure 3 illustrates a host display and a dashboard of a vehicle;
Figure 4 is a flow chart illustrating steps of the method for determining and displaying intersection information, according to one embodiment of the disclosure;
Figure 5 illustrates an exemplary navigation screen including the navigation path; and
Figure 6 is a block diagram illustrating a system for determining and displaying intersection information according to one embodiment of the disclosure.

Before the disclosure is described in greater detail, it should be noted that where considered appropriate, reference numerals or terminal portions of reference numerals have been repeated among the figures to indicate corresponding or analogous elements, which may optionally have similar characteristics.

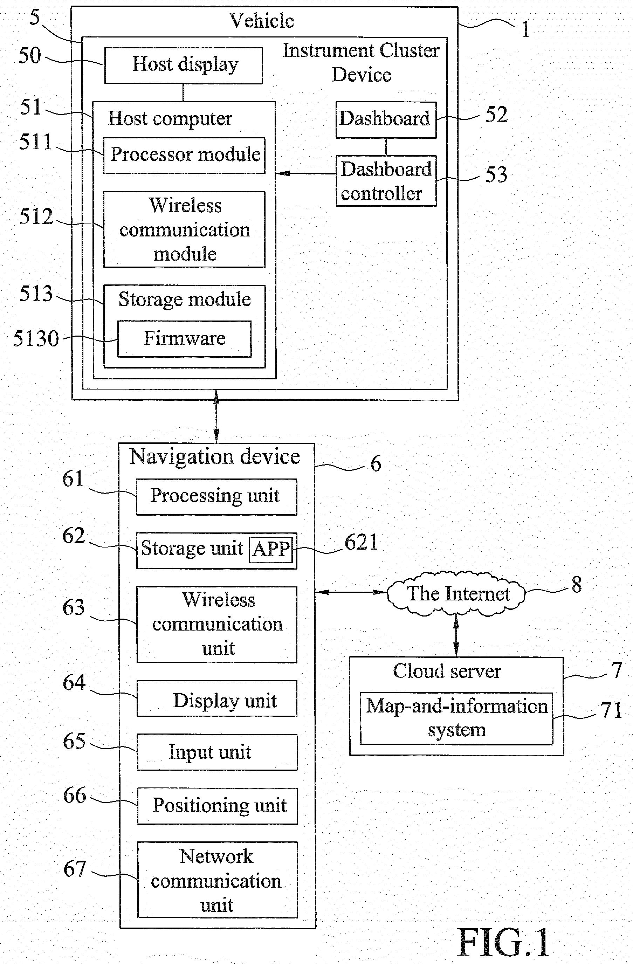

Referring to Figure 1, a system for determining and displaying intersection information according to one embodiment of the disclosure includes an instrument cluster device 5, a navigation device 6 and a cloud server 7.

The instrument cluster device 5 may be included in a vehicle 1 (e.g., a motorcycle, an automobile, an all terrain vehicle (ATV), a utility vehicle (UV), a battery electric vehicle (BEV), etc.).

The instrument cluster device 5 includes a host display 50, a host computer 51 electrically connected to the host display 50, a dashboard 52, and a dashboard controller 53 that is electrically connected to the dashboard 52.

The host computer 51 includes a processor module 511, a wireless communication module 512 and a storage module 513.

The processor module 511 is electrically connected to the components of the host computer 51, and may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), etc.

The wireless communication module 512 may include a short-range wireless communicating module supporting a short-range wireless communication network using a wireless technology of BLUETOOTH® and/or Wi-Fi, etc., and a mobile communicating module supporting telecommunication using Long-Term Evolution (LTE), the third generation (3G) and/or fourth generation (4G) of wireless mobile telecommunications technology, a near field communication (NFC) module, and/or the like.

The storage module 513 may include, but not limited to, a hard disk, a flash drive, and/or various forms of non-transitory storage medium. The storage module 513 stores program data 5130, such as an operating system (OS), firmware (FW), and application programs of the host computer 51.

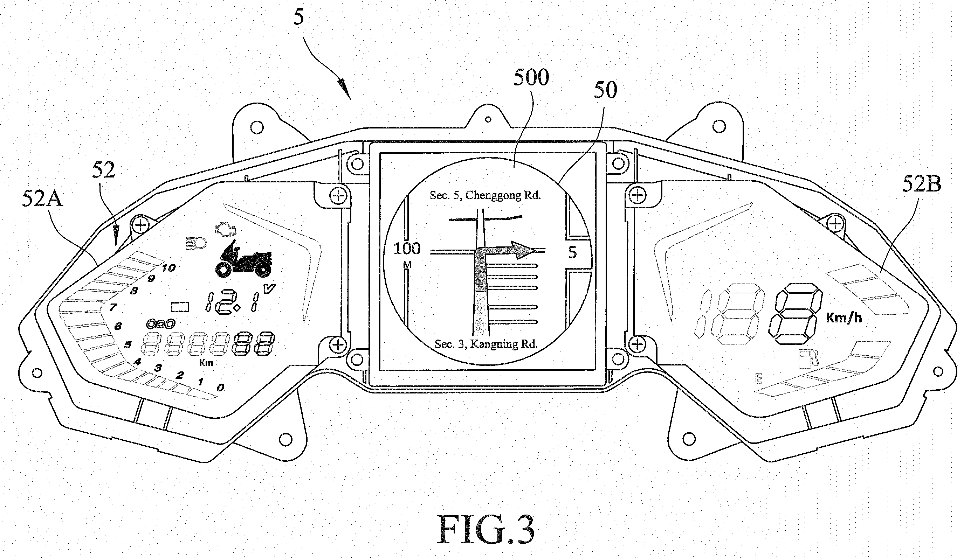

As illustrated in Figure 3, in this embodiment, the host display 50 and the dashboard 52 may be embodied using a liquid crystal display (LDC) device, and the dashboard 52 is divided into a first part 52A and a second part 52B that are respectively arranged at left and right sides of the host display 50.

The first part 52A of the dashboard 52 may be configured to display instrument cluster information such as an accumulated traveling distance (as an odometer) of the vehicle 1, a current voltage of a battery of the vehicle 1, a rotational speed of tires of the vehicle 1, a status of a headlight of the vehicle 1, or any additional information, in predefined formats and arrangements. The second part 52B of the dashboard 52 may be configured to display information such as a current speed of the vehicle 1, a current fuel level, or any additional information, in predefined formats and arrangements.

On the other hand, the host display 50 is configured as an ordinary display, such as a regular LCD, that is used to display an image based on any arbitrary image data provided by the host computer 51. For example, the host computer 51 may be operated to cause the host display 50 to display navigation information, or to display the instrument cluster information (e.g., the accumulated traveling distance of the vehicle 1, the traveling distance of an individual trip, the current voltage of the battery, the current speed of the vehicle 1, the current fuel level, the current tire pressures, etc.) .

The host computer 51 may be in communication with the navigation device 6 using a wired or wireless connection. When in communication, the host computer 51 may receive information from the navigation device 6, such as a map (as shown in Figure 3), a time, weather, a notification, etc., and control the host display 50 to display the above information.

In some embodiments, a user may manually select the information to be displayed on the host display 50 (e.g., the information displayed by the dashboard 52) by operating the display module 50 in a configuration mode . The configuration mode may be activated by, for example, pressing a button disposed on the display module 50.

The navigation device 6 may be embodied using a cell phone, a wearable device, a laptop, a tablet, etc., and includes a processing unit 61, a storage unit 62, a wireless communication unit 63, a display unit 64, an input unit 65, a positioning unit 66, and a network communication unit 67.

The processing unit 61, the storage unit 62 and the wireless communication unit 63 may be embodied using physical components that are similar to the processor module 511, the storage module 513 and the wireless communication module 512 described for the instrument cluster device 5, respectively. For example, the processing unit 61 may include, but not limited to, a single core processor, a multi-core processor, a dual-core mobile processor, a microprocessor, a microcontroller, a digital signal processor (DSP), a field-programmable gate array (FPGA), an application specific integrated circuit (ASIC), a radio-frequency integrated circuit (RFIC), etc.

The wireless communication unit 63 may include a short-range wireless communicating module supporting a short-range wireless communication network using a wireless technology of BLUETOOTH® and/or Wi-Fi, etc., and a mobile communicating module supporting telecommunication using Long-Term Evolution (LTE), the third generation (3G) and/or fourth generation (4G) of wireless mobile telecommunications technology, a near field communication (NFC) module, and/or the like. In one embodiment, the wireless communication unit 63 and the wireless communication module 512 both support BLUETOOTH®.

The storage unit 62 may include, but not limited to, a hard disk, a flash drive, and/or various forms of non-transitory storage medium.

The display unit 64 and the input unit 65 may be integrated into a touch screen.

The storage unit 62 stores therein an application program (APP) 621 that, when executed by the processing unit 61, causes the processing unit 61 to perform operations as described in later paragraphs of the disclosure.

The positioning unit 66 may be embodied using a global positioning system (GPS) device that is capable of obtaining a location of the navigation device 6, which may be represented by a set of GPS coordinates. The network communication unit 67 may include a mobile communicating module supporting telecommunication using Long-Term Evolution (LTE), the third generation (3G) and/or fourth generation (4G) of wireless mobile telecommunications technology, a near field communication (NFC) module, and/or the like, and is configured to communicate with the cloud server 7 via a network such as the Internet 8.

The cloud server 7 is installed with a map-and-information system 71 that is capable of planning a navigation path between two geographical points, and includes a processing unit (not shown) that is capable of executing the map-and-information system 71.

In use, when the user of the navigation device 6 intends to obtain a navigation path from a current location to a predetermined destination, he/she may operate the navigation device 6 to execute the APP 621. In turn, the navigation device 6 is capable of implementing a method for determining and displaying intersection information.

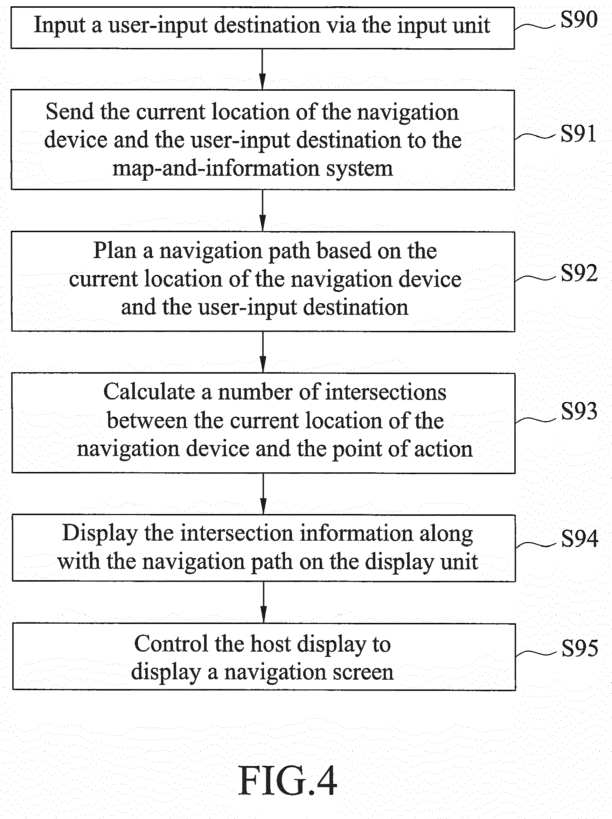

Figure 4 is a flow chart illustrating steps of the method for determining and displaying intersection information, according to one embodiment of the disclosure.

In step S90, the user operates the navigation device 6 to input a user-input destination via the input unit 65.

In response to receipt of the user- input destination, in step S91, the processing unit 61 controls the network communication unit 67 to send the current location of the navigation device 6 (obtained from the positioning unit 66) and the user-input destination to the map-and-information system 71. It is noted that in some embodiments, the navigation device 6 is programmed to periodically transmit the current location thereof to the map-and-information system 71.

In step S92, the map-and-information system 71 plans a navigation path based on the current location of the navigation device 6 and the user-input destination. The navigation path is used to direct a user of the navigation device 6 to move from the current location of the navigation device 6 to the user-input destination, and indicates at least one point of action thereon. In this instance, the navigation device 6 enters a navigation mode, and when the user moves with the navigation device 6, the current location of the navigation device 6 changes.

In step S93, in response to receipt of a request for providing the intersection information that includes the current location of the navigation device 6, the map-and-information system 71 calculates a number of intersections between the current location of the navigation device 6 and the point of action. The request may be generated automatically by the navigation device 6 executing the APP 621, or may be manually inputted by the user using the input unit 65.

It is noted that in the navigation mode, the current location of the navigation device 6 in step S93 may be different from that in step S91, and therefore the current location of the navigation device 6 is transmitted again to the map-and-information system 71.

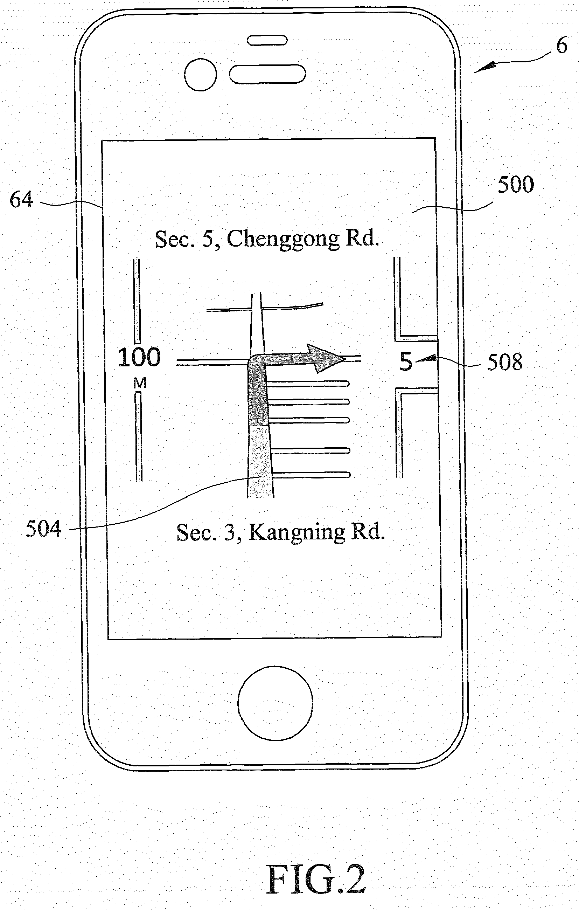

In step S94, the map-and-information system 71 transmits the intersection information including the number of intersections to the navigation device 6. In response to receipt of the intersection information, the navigation device 6 is capable of displaying the intersection information (including the number of intersections 508) along with the navigation path 504 on the display unit 64, in the form of a navigation screen 500 (as shown in Figure 2).

In step S95, the navigation device 6 transmits the intersection information including the number of intersections to the instrument cluster device 5 (see Figure 3). In response to receipt of the intersection information, the processor module 511 controls the host display 50 to display a navigation screen 500.

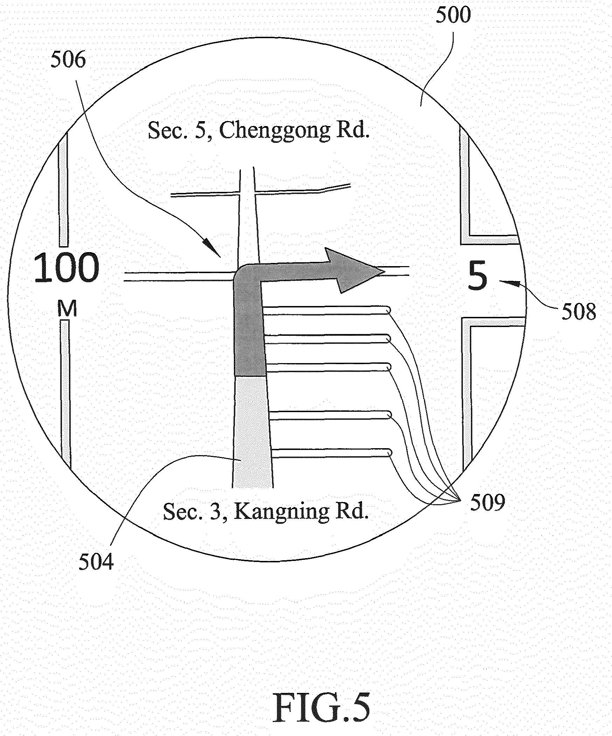

Figure 5 illustrates an exemplary navigation screen 500 displayed by the host display 50, including the navigation path 504 that is planned by the map-and-information system 71. In this example, the user-input destination is not shown, and one point of action 506 is identified as an intersection in which the user is directed to make a right turn. In some embodiments, the point of action indicates a next intersection to turn on the navigation path.

It is seen that, according to the navigation path 504, the user is to move forward, and make a right turn after passing five intersections 509. It is also displayed that the user is to move forward about 100 meters before making the right turn.

In order to display the intersection information in a more illustrative way, the navigation screen 500 may further include the number of intersections 508 between the current location of the navigation device 6 and the point of action 506.

It is noted that while in this embodiment, the request for providing the intersection information is sent in step S93, in other embodiments, the request for providing the intersection information may be sent to the cloud server 7 any time when the navigation screen 500 is displayed on the display unit 64 and/or the host display 50. This may be useful in cases where multiple points of action are present. In this manner, the map-and-information system 71 is capable of updating the number of intersections 508 to a next one of the points of action.

In some embodiments, the request for providing the intersection information, along with the current location of the navigation device 6, may be sent automatically and periodically to the map-and-information system 71, such that the number of intersections 508 may be automatically updated for the user.

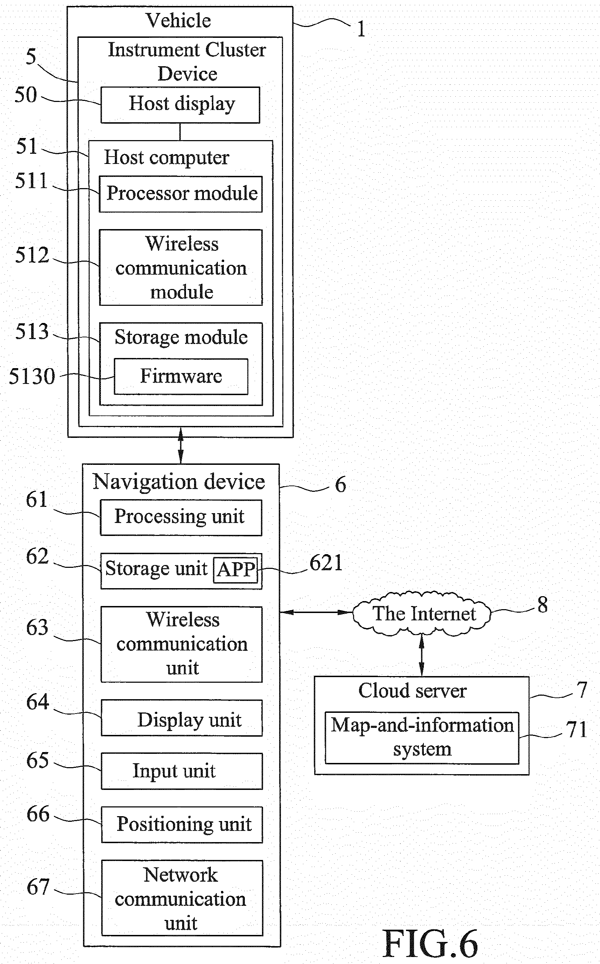

Figure 6 is a block diagram illustrating a system for determining and displaying intersection information according to one embodiment of the disclosure. The system includes an instrument cluster device 5, a navigation device 6 and a cloud server 7.

It is noted that in this embodiment, the dashboard 52 and the dashboard controller 53 are omitted, and the host computer 51 is configured to further perform the operations that are done by the dashboard controller 53 described in the previous embodiments, and the host display 50 is employed to further display the information that is originally displayed by the dashboard 52. Operations in this embodiment are substantially similar to those as described in the previous embodiments, and it should be appreciated by ones skilled in the art that this embodiment includes all effects and advantages described in the previous embodiment.

To sum up, the embodiments of the disclosure provide a navigation system and a method implemented by the navigation system to determine intersection information that includes a number of intersections leading to the point of action. When the navigation screen 500 is displayed by the host display 50 and/or the display unit 64, the user, who may be driving the vehicle 1, may be better informed of the information to make decisions (e.g., when to make a turn, when to change a lane in anticipation of a turn, etc.).

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A navigation method for determining and displaying intersection information, to be implemented using a navigation device (6) in communication with a cloud server (7) that operates a map-and-information system (71), the navigation method being **characterized by**:
transmitting, by the navigation device (6), a current location of the navigation device (6) and a user-input destination to the map-and-information system (71);
planning, by the map-and-information system (71), a navigation path based on the current location of the navigation device (6) and the user-input destination, the navigation path being used to direct a user of the navigation device (6) to move from the current location of the navigation device (6) to the user-input destination, and indicating a point of action thereon;
calculating, by the map-and-information system (71), a number of intersections between the current location of the navigation device (6) and the point of action along the navigation path;
transmitting, by the map-and-information system (71), intersection information including the number of intersections to the navigation device (6); and
displaying, by the navigation device (6), the intersection information received from the map-and-information system (71).

2. The navigation method of Claim 1, to be implemented further by a vehicle (1) that includes an instrument cluster device (5), the instrument cluster device (5) being in communication with the navigation device (6), the navigation method being further **characterized by**, after the transmitting intersection information to the navigation device (6):
transmitting, by the navigation device (6), the intersection information including the number of intersections to the instrument cluster device (5) ; and
displaying, by the instrument cluster device (5), the intersection information received from the navigation device (6).

3. The navigation method of any one of Claims 1 and 2, **characterized in that** the calculating is executed by the map-and-information system (71) in response to a request for providing the intersection information which is received from the navigation device (6).

4. The navigation method of any one of Claims 1 to 3, **characterized in that** the point of action indicates a next intersection to turn on the navigation path.

5. The navigation method of any one of Claims 1 to 4, **characterized in that** the current location of the navigation device (6) is represented by a set of global positioning system (GPS) coordinates.

6. A navigation system for determining and displaying intersection information, **characterized by**:
a navigation device (6) that is carried by a user for receiving a user-input destination and that is capable of obtaining a current location thereof; and
a cloud server (7) that is in communication with said navigation device (6) and that operates a map-and-information system (71), wherein the map-and-information system (71) is programmed to, in response to receiving the current location of said navigation device (6) and the user-input destination from said navigation device (6),
plan, based on the current location of said navigation device (6) and the user-input destination, a navigation path that is used to direct the user to move from the current location of said navigation device (6) to the user-input destination, and that indicates a point of action thereon,
calculate a number of intersections between the current location of said navigation device (6) and the point of action along the navigation path, and
transmit intersection information including the number of intersections to said navigation device (6) for displaying the intersection information.

7. The navigation system of Claim 6, further **characterized by** a vehicle (1) that includes an instrument cluster device (5), the instrument cluster device (5) being in communication with said navigation device (6), wherein:
said navigation device (6) is programmed to, in response to receipt of the intersection information, transmit the intersection information including the number of intersections to said instrument cluster device (5); and
said instrument cluster device (5) is programmed to display the intersection information received from said navigation device (6).

8. The navigation system of any one of Claims 6 and 7, **characterized in that** the map-and-information system (71) is programmed to calculate the number of intersections in response to receiving a request for providing the intersection information from said navigation device (6).

9. The navigation system of any one of Claims 6 to 8, **characterized in that** the point of action indicates a next intersection to turn on the navigation path.

10. The navigation system of any one of Claims 6 to 9, **characterized in that** the current location of said navigation device (6) is represented by a set of global positioning system (GPS) coordinates.
